(19) Europäisches Patentamt / European Patent Office / Office européen des brevets

(11) **EP 4 193 464 B1**

(12) **FASCICULE DE BREVET EUROPEEN**

(45) Date de publication et mention
de la délivrance du brevet:
**25.12.2024 Bulletin 2024/52**

(21) Numéro de dépôt: **21745275.4**

(22) Date de dépôt: **12.07.2021**

(51) Classification Internationale des Brevets (IPC):
***H02S 50/10*** *(2014.01)*

(52) Classification Coopérative des Brevets (CPC):
**H02S 50/10;** Y02E 10/50

(86) Numéro de dépôt international:
**PCT/EP2021/069320**

(87) Numéro de publication internationale:
**WO 2022/028817 (10.02.2022 Gazette 2022/06)**

(54) **METHODE ET DISPOSITIF DE CALIBRATION DE MESURES DE L'EFFET D'ENCRASSEMENT D'UN PANNEAU SOLAIRE**

VERFAHREN UND VORRICHTUNG ZUR KALIBRIERUNG VON MESSUNGEN DES VERSCHMUTZUNGSEFFEKTS AUF EINEM SOLARPANEEL

METHOD AND DEVICE FOR CALIBRATING MEASUREMENTS OF THE EFFECT OF SOILING ON A SOLAR PANEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.08.2020 FR 2008275**

(43) Date de publication de la demande:
**14.06.2023 Bulletin 2023/24**

(73) Titulaire: **Commissariat à l'Energie Atomique et aux Energies Alternatives
75015 Paris (FR)**

(72) Inventeurs:
• **PILAT, Eric**
  **38054 GRENOBLE (FR)**
• **PICHENOT, Grégoire**
  **38054 GRENOBLE (FR)**

(74) Mandataire: **Atout PI Laplace
Immeuble Up On
25 Boulevard Romain Rolland
CS 40072
75685 Paris Cedex 14 (FR)**

(56) Documents cités:
**US-A1- 2016 359 453      US-A1- 2020 151 379**

EP 4 193 464 B1

**Description**

L'invention concerne le domaine des panneaux solaires photovoltaïques ou thermiques et plus précisément l'analyse des effets de l'encrassement ou de la salissure de tels panneaux solaires au cours du temps. Le document US2016/359453A1 est décrit des dispositifs solaires.

L'invention porte sur une méthode et un dispositif permettant de réaliser une calibration des écarts de mesures entre un panneau solaire de référence et un panneau solaire exposé en prenant en compte l'impact de la réflexion des rayons du soleil sur un panneau.

En général, les panneaux solaires ne comportent que très peu d'éléments mobiles et ne nécessitent donc peu ou pas d'entretien. Cependant, dans un contexte de croissance importante de la production d'énergie via des panneaux solaires, des pertes, mêmes faibles en pourcentage, doivent être évitées afin de maximiser le rendement.

Par ailleurs, les panneaux solaires peuvent faire l'objet d'un encrassement au cours du temps, en particulier dans des régions arides qui sont choisies pour leur ensoleillement mais dans lesquelles l'environnement peut être très poussiéreux.

L'encrassement ou la salissure d'un panneau solaire affecte son rendement et il est donc important de développer des méthodes pour surveiller l'effet de cet encrassement en vue d'apporter des actions correctives.

Une méthode connue pour surveiller l'état d'encrassement d'un panneau solaire consiste à comparer la production de courant de ce panneau avec un autre panneau identique propre utilisé comme panneau de référence.

La méthode la plus courante consiste à exposer deux modules photovoltaïques similaires sur le même châssis. Un des deux modules est nettoyé périodiquement pendant que l'autre module va progressivement s'encrasser. Un dispositif électronique réalise une mesure de courant pour les deux modules, cette mesure étant directement proportionnelle aux photons impactant les cellules. Le ratio entre les deux courants mesurés permet de quantifier le taux de salissure du second module.

Une alternative à cette méthode consiste à protéger le module de référence par un couvercle amovible qui est ouvert le temps de réaliser les mesures de courants nécessaires et refermé ensuite de sorte à protéger le panneau de l'encrassement.

Les deux modules photovoltaïques peuvent générer des courants différents, même si ils sont issus de la même technologie, pour des raisons différentes de l'encrassement.

Tout d'abord, le procédé de fabrication des modules occasionne des variations contrôlées dans les courants générés qui peuvent représenter de l'ordre de 1%.

Ensuite, la dégradation du module dans le temps, communément appelée vieillissement, n'est pas strictement similaire entre les deux modules même si ils sont issus de la même chaine de fabrication.

Enfin, suivant l'angle d'incidence des rayons du soleil, la réflexion sur la surface des panneaux peut être différente entre deux modules identiques du fait des variations propres à la fabrication.

Il est donc nécessaire de calibrer les mesures de courant réalisées sur les deux modules afin de prendre en compte précisément les sources de différence entre les mesures de courant réalisées sur deux modules photovoltaïques similaires, d'identifier précisément l'impact de l'encrassement et de le séparer des autres sources de biais.

L'invention propose une méthode et un dispositif de calibration des mesures de courant réalisées sur deux panneaux solaires similaires qui permet de prendre notamment en compte l'impact de l'incidence des rayons du soleil sur les panneaux.

A cet effet, l'invention propose une méthode de calibration de mesures de l'effet d'un encrassement d'un panneau solaire, la méthode comprenant les étapes de :

- Réaliser un ensemble de mesures sur un couple d'un panneau solaire de référence et d'un panneau solaire exposé, les mesures comprenant au moins une pluralité de mesures de courant réalisées simultanément sur chacun desdits panneaux solaires à une pluralité d'instants prédéterminés,

- Pour chaque instant de mesure de courant, déterminer un angle d'incidence des rayons du soleil réfléchis sur chaque panneau solaire,

- Déterminer les coefficients d'une droite de régression linéaire à partir des couples {écart de mesures de courant entre les deux panneaux solaires ; angle d'incidence},

- Sauvegarder lesdits coefficients pour calibrer des mesures de courant ultérieures.

Selon un aspect particulier de l'invention, l'ensemble de mesures réalisées comprend en outre une pluralité de mesures de température réalisées simultanément sur chaque panneau solaire auxdits instants prédéterminés.

Selon une variante, l'invention comprend une étape de filtrage dudit ensemble de mesures pour éliminer des mesures non exploitables.

Selon un aspect particulier de l'invention, l'étape de filtrage consiste au moins à :

- Supprimer les mesures de courant réalisées sur les deux panneaux solaires lorsque la mesure de courant réalisée sur le panneau solaire exposé est inférieure à un premier seuil prédéterminé, et/ou

- Supprimer les mesures de courant réalisées sur les deux panneaux solaires lorsque l'écart entre les deux mesures de température réalisées au même instant est supérieur à un second seuil prédéterminé.

Selon un aspect particulier de l'invention, la pluralité de mesures est réalisée à différents instants successifs dans une plage temporelle de durée comprise entre 5h et 12h.

Selon un aspect particulier de l'invention, lesdits coefficients d'une droite de régression linéaire sont déterminés par une méthode des moindres carrés.

Selon un aspect particulier de l'invention, l'angle d'incidence des rayons du soleil réfléchis sur chaque panneau solaire est déterminé au moins à partir de la position du soleil, de l'orientation et de l'inclinaison des panneaux solaires.

L'invention a aussi pour objet une méthode de mesure de l'effet d'un encrassement d'un panneau solaire comprenant les étapes de :

- Réaliser une mesure de courant simultanément sur un panneau solaire de référence et sur un panneau solaire exposé,

- Corriger l'écart entre les deux mesures de courant par un terme correctif dépendant d'un angle d'incidence des rayons du soleil réfléchis sur l'un des deux panneaux solaires à l'instant des mesures et de coefficients de calibration déterminés au cours d'une phase de calibration préalable.

L'invention a aussi pour objet un dispositif de calibration de mesures de l'effet d'un encrassement d'un panneau solaire comprenant un couple de panneaux solaires constitué d'un panneau solaire de référence et d'un panneau solaire exposé, un appareil de mesure configuré pour réaliser un ensemble de mesures sur ledit couple de panneaux solaires, les mesures comprenant au moins une pluralité de mesures de courant réalisées simultanément sur chaque panneau solaire à une pluralité d'instants prédéterminés et un dispositif de calcul configuré pour:

- pour chaque instant de mesure de courant, déterminer un angle d'incidence des rayons du soleil réfléchis sur chaque panneau solaire,

- déterminer les coefficients d'une droite de régression linéaire à partir des couples {écart de mesures de courant entre les deux panneaux solaires ; angle d'incidence},

- sauvegarder lesdits coefficients pour calibrer des mesures de courant réalisées ultérieurement.

L'invention a aussi pour objet un dispositif de mesure de l'effet d'un encrassement d'un panneau solaire comprenant un couple de panneaux solaires constitué d'un panneau solaire de référence et d'un panneau solaire exposé, un appareil de mesure configuré pour réaliser une mesure de courant simultanément sur ledit couple de panneaux solaires et un dispositif de calcul configuré pour corriger l'écart entre les deux mesures de courant par un terme correctif dépendant d'un angle d'incidence des rayons du soleil réfléchis sur l'un des deux panneaux solaires à l'instant des mesures et de coefficients de calibration déterminés au cours d'une phase de calibration préalable.

Selon un aspect particulier de l'invention, le panneau solaire de référence comporte un couvercle de protection amovible.

D'autres caractéristiques et avantages de la présente invention apparaîtront mieux à la lecture de la description qui suit en relation aux dessins annexés suivants.

[Fig. 1] la figure 1 représente un schéma d'un exemple de dispositif de calibration selon un mode de réalisation de l'invention,

[Fig. 2] la figure 2 représente un organigramme détaillant les étapes de la méthode de calibration selon un mode de réalisation de l'invention,

[Fig. 3] la figure 3 représente un organigramme détaillant les étapes d'une méthode de mesure de l'effet de l'encrassement d'un panneau solaire à partir de coefficient de calibration déterminés à l'aide de la méthode de la figure 2,

[Fig. 4] la figure 4 représente un diagramme d'un ensemble de mesures d'écart de courant en fonction d'un angle d'incidence.

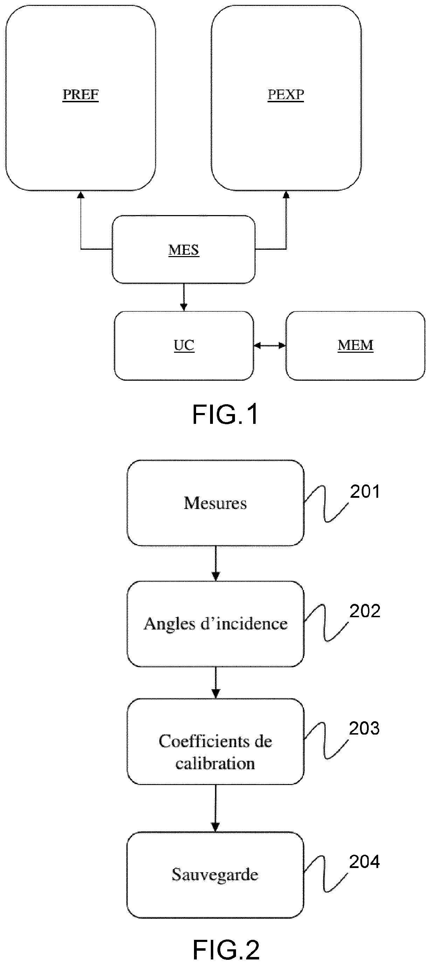

La figure 1 représente un schéma d'un dispositif de calibration selon un mode de réalisation de l'invention. Ce dispositif comporte un couple de panneaux solaires photovoltaïques ou thermiques comprenant un panneau solaire de référence PREF et un panneau solaire exposé PEXP. Comme indiqué en préambule, le panneau solaire de référence PREF est nettoyé régulièrement ou protégé de l'encrassement par un couvercle. Un (ou plusieurs) appareil de mesure MES est connecté aux deux panneaux pour réaliser des mesures de courant et/ou de température. Une unité de calcul UC reçoit les mesures et détermine des coefficients de calibration qui sont sauvegardés dans une mémoire MEM.

Le dispositif décrit à la figure 1 peut aussi être utilisé dans une phase opérationnelle lors de laquelle une mesure de courant est réalisée respectivement sur chacun des deux panneaux et l'unité de calcul UC applique une correction à l'écart entre les deux mesures de courant à partir des coefficients de calibration sauvegardés dans la mémoire MEM.

Sans sortir du cadre de l'invention, d'autres agencements du dispositif sont envisageables, en particulier l'unité de calcul UC et la mémoire MEM peuvent être remplacés par un ordinateur apte à communiquer avec l'appareil de mesure MES via une interface adaptée, une liaison de communication ou tout autre moyen.

La figure 2 schématise les étapes de réalisation d'une méthode de calibration selon un mode de réalisation de l'invention.

La méthode de calibration est réalisée de préférence un jour ensoleillé (c'est-à-dire un jour pour lequel l'ensoleillement est supérieur à 4000 Wh , équivalent à 5h sans nuages). Elle suppose que les deux panneaux solaires PREF,PEXP sont nettoyés avant de démarrer la méthode.

La première étape 201 consiste à réaliser des mesures de courants simultanées sur les deux panneaux solaires PREF,PEXP à plusieurs instants dans un intervalle de temps de préférence compris entre 5 et 12 heures. Les mesures sont, par exemple, réalisées périodiquement avec une période comprise entre 5 et 30 secondes, par exemple. Toutes les mesures sont sauvegardées.

L'ensemble des mesures est, par exemple, sauvegardé dans un fichier qui peut contenir d'autres informations parmi lesquelles : la date du jour où est réalisée la calibration, le type de panneau solaire (type de substrat, technologie de la cellule, fabricant), les références de chacun des deux panneaux, les courants de court-circuit STC (standard test conditions) de chacun des panneaux, un seuil de courant minimum au-delà duquel la mesure est considérée valide, un coefficient de température, des informations permettant d'évaluer l'inclinaison des panneaux ainsi que leur orientation, des informations concernant la latitude, la longitude et l'altitude de l'endroit où sont placés les panneaux, les dates et heures des instants de mesure.

Dans une variante de réalisation, des mesures de température des deux panneaux sont réalisées également.

A partir de l'ensemble des mesures sauvegardées, on détermine ensuite des coefficients de calibration qui permettent de corriger les valeurs de courant afin d'isoler uniquement les contributions liées à l'encrassement.

Un objectif de la méthode est d'estimer l'équation de la droite qui relie l'écart entre deux mesures de courant simultanément réalisées sur les deux panneaux et un angle d'incidence des rayons du soleil sur les panneaux.

Pour cela, dans une étape 202, on détermine cet angle d'incidence pour chaque mesure. Cet angle peut être déterminé à partir de la position du soleil, de l'orientation et de l'inclinaison des panneaux. La position du soleil à un instant donné est déterminée à partir de la latitude, longitude et altitude du dispositif ainsi que de l'instant de la mesure.

Dans une variante particulière de l'invention, une étape de filtrage des mesures est réalisée en supprimant les mesures qui ne sont pas exploitables.

Les mesures supprimées sont, par exemple, celles pour lesquelles la mesure de courant du panneau exposé PEXP est inférieure à un seuil de courant minimum et/ou les mesures pour lesquelles l'écart relatif entre les mesures de température réalisées sur les deux panneaux est supérieur à 5%.

On note $y_i$ l'écart de mesures de courants et $x_i$ l'angle d'incidence.

$$y_i = Icc_{i;\,Expos\acute{e}} - Icc_{i;\,R\acute{e}f\acute{e}rent}$$

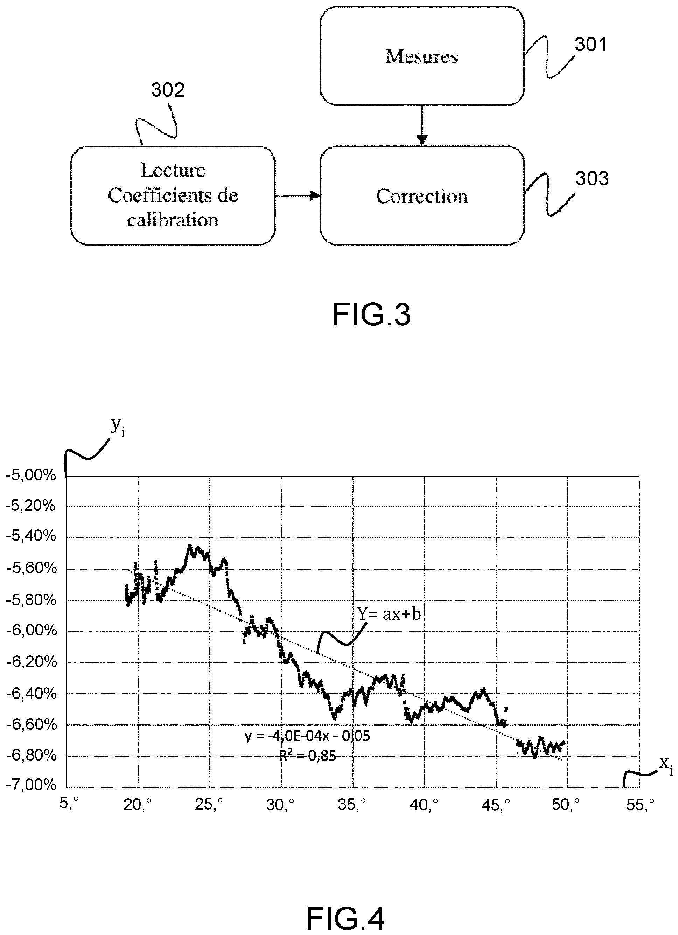

Les couples $\{y_i, x_i\}$ représentent un nuage de points tel qu'illustré à la figure 4.

Dans une étape 203 on détermine ensuite la droite y=ax+b de régression linéaire qui correspond au nuage de points. Les coefficients (a,b) de cette droite sont, par exemple, déterminés par une méthode des moindres carrés et peuvent être calculés via les relations suivantes :

$$a = \frac{n \times \sum_{i=1}^{n} x_i\, y_i - \sum_{i=1}^{n} x_i \times \sum_{i=1}^{n} y_i}{n \times \sum_{i=1}^{n} x_i^2 - (\sum_{i=1}^{n} x_i)^2}$$

$$b = \frac{\sum_{i=1}^{n} y_i - a \times \sum_{i=1}^{n} x_i}{n}$$

n est le nombre de mesures retenues, éventuellement après filtrage.

Les coefficients de calibration (a,b) sont ensuite sauvegardés 204 en mémoire pour être utilisés lors d'une prochaine mesure et/ou jusqu'à une prochaine phase de calibration.

La droite y=ax+b obtenue est représentée à la figure 4 pour un exemple particulier de mesures.

La figure 3 détaille les étapes de mise en oeuvre d'une méthode de mesure de l'effet de l'encrassement du panneau solaire exposé PEXP, selon un mode de réalisation de l'invention.

Lorsqu'on souhaite évaluer l'état d'encrassement du panneau solaire exposé PEXP par rapport à un panneau solaire de référence PREF, on réalise des mesures de courant 301 simultanément sur les deux panneaux solaires. Ensuite, on applique une correction 303 aux mesures à partir des coefficients de calibration (a,b) lus 302 en mémoire.

La prise en compte de cette correction se fait de la façon suivante :

Soit $\Delta_{Icc,j}$, l'écart brut calculé par rapport aux mesures de courant réalisée à l'instant j (étape 301)

$$\Delta_{Icc,j} = Icc_{j;\,Expos\acute{e}} - Icc_{j;\,R\acute{e}f\acute{e}rent}$$

Soit $x_j$, l'angle d'incidence calculé pour la mesure $j$. Cet angle d'incidence est déterminé de la même façon qu'à l'étape 202 de la méthode de calibration.

On obtient 303 l'écart corrigé $\Delta_{Icc,j,Corr.}$ par la formule suivante :

$$\Delta_{Icc,j,Corr.} = \Delta_{Icc,j} + a \times x_j + b$$

Cette valeur corrigée permet de réaliser une analyse plus précise du niveau d'encrassement du panneau solaire exposé PEXP car elle ne contient plus les écarts qui ne sont pas dus à l'encrassement mais à d'autres sources dont l'angle d'incidence des rayons du soleil.

**Revendications**

1. Méthode de calibration de mesures de l'effet d'un encrassement d'un panneau solaire, la méthode comprenant les étapes de :

   - Réaliser (201) un ensemble de mesures sur un couple d'un panneau solaire de référence et d'un panneau solaire exposé, les mesures comprenant au moins une pluralité de mesures de courant réalisées simultanément sur chacun desdits panneaux solaires à une pluralité d'instants prédéterminés,
   - Pour chaque instant de mesure de courant, déterminer (202) un angle d'incidence des rayons du soleil réfléchis sur chaque panneau solaire,
   - Déterminer (203) les coefficients d'une droite de régression linéaire à partir des couples {écart de mesures de courant entre les deux panneaux solaires ; angle d'incidence},
   - Sauvegarder (204) lesdits coefficients pour calibrer des mesures de courant ultérieures.

2. Méthode de calibration selon la revendication 1 dans laquelle l'ensemble de mesures réalisées comprend en outre une pluralité de mesures de température réalisées simultanément sur chaque panneau solaire auxdits instants prédéterminés.

3. Méthode de calibration selon la revendication 2 comprenant une étape de filtrage dudit ensemble de mesures pour éliminer des mesures non exploitables.

4. Méthode de calibration selon la revendication 3 dans laquelle l'étape de filtrage consiste au moins à :

   - Supprimer les mesures de courant réalisées sur les deux panneaux solaires lorsque la mesure de courant réalisée sur le panneau solaire exposé est inférieure à un premier seuil prédéterminé, et/ou
   - Supprimer les mesures de courant réalisées sur les deux panneaux solaires lorsque l'écart entre les deux mesures de température réalisées au même instant est supérieur à un second seuil prédéterminé.

5. Méthode de calibration selon l'une des revendications précédentes dans laquelle la pluralité de mesures est réalisée à différents instants successifs dans une plage temporelle de durée comprise entre 5h et 12h.

6. Méthode de calibration selon l'une des revendications précédentes dans laquelle lesdits coefficients d'une droite de régression linéaire sont déterminés par une méthode des moindres carrés.

7. Méthode de calibration selon l'une des revendications précédentes dans laquelle l'angle d'incidence des rayons du soleil réfléchis sur chaque panneau solaire est déterminé au moins à partir de la position du soleil, de l'orientation et de l'inclinaison des panneaux solaires.

8. Méthode de mesure de l'effet d'un encrassement d'un panneau solaire comprenant les étapes de :

   - Réaliser (301) une mesure de courant simultanément sur un panneau solaire de référence et sur un panneau solaire exposé,
   - Corriger (303) l'écart entre les deux mesures de courant par un terme correctif dépendant d'un angle d'incidence des rayons du soleil réfléchis sur l'un des deux panneaux solaires à l'instant des mesures et de coefficients de calibration déterminés au cours d'une phase de calibration selon la revendication 1.

9. Dispositif de calibration de mesures de l'effet d'un encrassement d'un panneau solaire selon la méthode de la revendication 1, comprenant un couple de panneaux solaires constitué d'un panneau solaire de référence (PREF) et d'un panneau solaire exposé (PEXP), un appareil de mesure (MES) configuré pour réaliser un ensemble de mesures sur ledit couple de panneaux solaires, les mesures comprenant au moins une pluralité de mesures de courant réalisées simultanément sur chaque panneau solaire à une pluralité d'instants prédéterminés et un dispositif de calcul (UC) configuré pour:

   - pour chaque instant de mesure de courant, déterminer un angle d'incidence des rayons du soleil réfléchis sur chaque panneau solaire,
   - déterminer les coefficients d'une droite de régression linéaire à partir des couples {écart de mesures de courant entre les deux panneaux solaires ; angle d'incidence},

- sauvegarder lesdits coefficients pour calibrer des mesures de courant réalisées ultérieurement.

10. Dispositif de mesure de l'effet d'un encrassement d'un panneau solaire selon la méthode de la revendication 8, comprenant un couple de panneaux solaires constitué d'un panneau solaire de référence (PREF) et d'un panneau solaire exposé (PEXP), un appareil de mesure (MES) configuré pour réaliser une mesure de courant simultanément sur ledit couple de panneaux solaires et un dispositif de calcul (UC) configuré pour corriger l'écart entre les deux mesures de courant par un terme correctif dépendant d'un angle d'incidence des rayons du soleil réfléchis sur l'un des deux panneaux solaires à l'instant des mesures et de coefficients de calibration déterminés au cours d'une phase de calibration préalable.

11. Dispositif selon l'une quelconque des revendications 9 ou 10 dans lequel le panneau solaire de référence (PREF) comporte un couvercle de protection amovible.

**Patentansprüche**

1. Verfahren zum Kalibrieren von Messungen des Effekts der Verschmutzung einer Solarplatte, wobei das Verfahren die folgenden Schritte umfasst:

- Durchführen (201) eines Satzes von Messungen an einem Paar aus einer Referenz-Solarplatte und einer exponierten Solarplatte, wobei die Messungen mindestens eine Vielzahl von Strommessungen umfassen, die gleichzeitig an jeder der Solarplatten zu einer Vielzahl von vorbestimmten Zeitpunkten durchgeführt werden,
- Bestimmen (202), für jeden Zeitpunkt der Strommessung, eines Einfallswinkels der von jeder Solarplatte reflektierten Sonnenstrahlen,
- Bestimmen (203) der Koeffizienten einer linearen Regressionsgeraden auf der Basis der Paare {Abweichung der Strommesswerte zwischen den beiden Solarplatten; Einfallswinkel},
- Speichern (204) der Koeffizienten zum Kalibrieren späterer Strommessungen.

2. Kalibrierungsverfahren nach Anspruch 1, wobei der Satz von durchgeführten Messungen ferner eine Vielzahl von Temperaturmessungen umfasst, die gleichzeitig an jeder Solarplatte zu den vorbestimmten Zeitpunkten durchgeführt werden.

3. Kalibrierungsverfahren nach Anspruch 2, das einen Schritt des Filterns des Messsatzes umfasst, um nicht verwertbare Messwerte zu eliminieren.

4. Kalibrierungsverfahren nach Anspruch 3, wobei der Filterungsschritt mindestens besteht aus:

- Löschen der an den beiden Solarplatten durchgeführten Strommessungen, wenn die an der exponierten Solarplatte durchgeführte Strommessung unter einem ersten vorbestimmten Schwellenwert liegt, und/oder
- Löschen der an den beiden Solarplatten durchgeführten Strommessungen, wenn die Abweichung zwischen den beiden zum selben Zeitpunkt durchgeführten Temperaturmessungen über einem zweiten vorbestimmten Schwellenwert liegt.

5. Kalibrierungsverfahren nach einem der vorhergehenden Ansprüche, wobei die Vielzahl von Messungen zu verschiedenen aufeinanderfolgenden Zeitpunkten innerhalb eines Zeitbereichs mit einer Dauer zwischen 5h und 12h durchgeführt werden.

6. Kalibrierungsverfahren nach einem der vorhergehenden Ansprüche, wobei die Koeffizienten einer linearen Regressionsgeraden durch eine Methode der kleinsten Quadrate bestimmt werden.

7. Kalibrierungsverfahren nach einem der vorhergehenden Ansprüche, wobei der Einfallswinkel der von jeder Solarplatte reflektierten Sonnenstrahlen mindestens auf der Basis des Sonnenstands, der Orientierung und der Neigung der Solarplatte bestimmt wird.

8. Verfahren zum Messen des Effekts der Verschmutzung einer Solarplatte, das die folgenden Schritte umfasst:

- Durchführen (301) einer Strommessung gleichzeitig an einer Referenz-Solarplatte und an einer exponierten Solarplatte,
- Korrigieren (303) der Abweichung zwischen den beiden Strommesswerten durch einen Korrekturterm, der von einem Einfallswinkel der zum Zeitpunkt der Messungen an einer der beiden Solarplatten reflektierten Sonnenstrahlen und von während einer Kalibrierungsphase gemäß Anspruch 1 bestimmten Kalibrierungskoeffizienten abhängt.

9. Vorrichtung zur Kalibrierung von Messungen des Effekts der Verschmutzung einer Solarplatte nach dem Verfahren von Anspruch 1, die ein aus einer Referenz-Solarplatte (PREF) und einer exponierten Solarplatte (PEXP) bestehendes Paar Solarplatten, ein Messgerät (MES), das zum Durchführen eines Satzes von Messungen an dem Paar Solarplatten konfiguriert ist, wobei die Messungen mindestens eine Vielzahl von Strommessungen umfassen, die gleichzeitig an jeder Solarplatte zu einer Vielzahl von vorbestimmten Zeitpunkten durchgeführt werden, und eine Rechenvorrichtung (UC) umfasst, die konfiguriert ist zum:

- Bestimmen, für jeden Strommesszeitpunkt, eines Einfallswinkels der von jeder Solarplatte reflektierten Sonnenstrahlen,
- Bestimmen der Koeffizienten einer linearen Regressionsgeraden auf der Basis der Paare {Abstand der Strommessungen zwischen den beiden Solarplatten; Einfallswinkel},
- Speichern der Koeffizienten zum Kalibrieren später durchgeführter Strommessungen.

10. Vorrichtung zur Messung des Effekts der Verschmutzung einer Solarplatte gemäß dem Verfahren von Anspruch 8, die ein aus einer Referenz-Solarplatte (PREF) und einer exponierten Solarplatte (PEXP) bestehendes Paar von Solarplatten, ein Messgerät (MES), das zum gleichzeitigen Durchführen einer Strommessung an dem Paar Solarplatten konfiguriert ist, und eine Rechenvorrichtung (UC) umfasst, die zum Korrigieren der Abweichung zwischen den beiden Strommesswerten durch einen Korrekturterm konfiguriert ist, der von einem Einfallswinkel der zum Messzeitpunkt auf eine der beiden Solarplatten reflektierten Sonnenstrahlen und von im Laufe einer vorherigen Kalibrierungsphase bestimmten Kalibrierungskoeffizienten abhängt.

11. Vorrichtung nach Anspruch 9 oder 10, wobei die Referenz-Solarplatte (PREF) eine abnehmbare Schutzabdeckung aufweist.

**Claims**

1. A calibration method for measurements of the effect of a soiling of a solar panel, the method comprising the steps of:

- producing (201) a set of measurements on a pair of a reference solar panel and an exposed solar panel, the measurements comprising at least a plurality of electric current measurements which are carried out simultaneously on each of the solar panels at a plurality of predetermined times,
- for each time of electric current measurement, determining (202) an incidence angle of the rays of the sun reflected on each solar panel,
- determining (203) the coefficients of a linear regression line from the pairs {deviation of electric current measurements between the two solar panels; angle of incidence},
- saving (204) the coefficients to calibrate the subsequent electric current measurements.

2. The calibration method according to claim 1, wherein the set of measurements carried out further comprises a plurality of temperature measurements which are carried out simultaneously on each solar panel at the predetermined times.

3. The calibration method according to claim 2, comprising a step of filtering the set of measurements to eliminate measurements which cannot be used.

4. The calibration method according to claim 3, wherein the filtering step involves at least:

- eliminating the electric current measurements carried out on the two solar panels when the electric current measurement carried out on the exposed solar panel is less than a first predetermined threshold, and/or
- eliminating the electric current measurements carried out on the two solar panels when the deviation between the two temperature measurements carried out at the same time is greater than a second predetermined threshold.

5. The calibration method according to any one of the preceding claims, wherein the plurality of measurements are carried out at different successive times in a time range lasting between 5 hours and 12 hours.

6. The calibration method according to any one of the preceding claims, wherein the coefficients of a linear regression line are determined using a least squares method.

7. The calibration method according to any one of the preceding claims, wherein the angle of incidence of the rays of the sun reflected on each solar panel is determined at least from the position of the sun, the orientation and the inclination of the solar panels.

8. A method for measuring the effect of soiling of a solar panel, comprising the steps of:

- carrying out (301) an electric current measurement simultaneously on a reference solar panel and on an exposed solar panel,
- correcting (303) the deviation between the two electric current measurements using a corrective term which is dependent on an angle of incidence of the rays of the sun reflected on one of the two solar panels at the time of the measurements and on calibration coefficients determined during a calibration phase according to claim 1.

9. A device for calibration of measurements of the effect of a soiling of a solar panel according to the method of claim 1, comprising a pair of solar panels which is constituted by a reference solar panel (PREF) and an exposed solar panel (PEXP), a measurement device (MES) which is configured to carry out a set of measurements on the pair of solar panels, the measurements comprising at least a plurality of electric current measurements carried out simultaneously on each solar panel at a plurality of predetermined times and a calculation device (UC) which is configured to:

- determine, for each electric current measurement time, an angle of incidence of the rays of the sun reflected on each solar panel,
- determine the coefficients of a linear regression line from the pairs {deviation of electric current measurements between the two solar panels; angle of incidence},
- save the coefficients to calibrate the electric current measurements carried out subsequently.

10. A device for measuring the effect of a soiling of a solar panel according to the method of claim 8, comprising a pair of solar panels which consists of a reference solar panel (PREF) and an exposed solar panel (PEXP), a measurement device (MES) which is configured to carry out an electric current measurement simultaneously on the pair of solar panels and a calculation device (UC) which is configured to correct the deviation between the two electric current measurements using a corrective term which is dependent on an angle of incidence of the rays of the sun reflected on one of the two solar panels at the time of the measurements and on calibration coefficients which are determined during a prior calibration phase.

11. A device according to any one of claim 9 or 10, wherein the reference solar panel (PREF) has a removable protection cover.

PREF

PEXP

MES

UC ⟷ MEM

## FIG.1

Mesures ⟩ 201

Angles d'incidence ⟩ 202

Coefficients de calibration ⟩ 203

Sauvegarde ⟩ 204

## FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2016359453 A1